# EUROPEAN PATENT APPLICATION

(11) **EP 2 746 749 A1**
(43) Date of publication of application: **25.06.2014**
(21) Application number: 12198075.9
(22) Date of filing: 19.12.2012
(51) Int. Cl.: G01N 21/77

(54) **Optical sensor arrangement and method for measuring an observable**

(71) Applicant: FRAUNHOFER-GESELLSCHAFT zur Förderung der angewandten Forschung e.V., 80636 Munich (DE)
(72) Inventor: Heidrich, Helmut, 12357 Berlin (DE); Lützow, Peter, 10781 Berlin (DE); Pergande, Daniel, 12203 Berlin (DE); Zamora Gomez, Alethea Vanessa, 10117 Berlin (DE)
(74) Representative: Pfenning, Meinig & Partner GbR

(57) **Abstract**

The invention relates to an optical sensor arrangement (1) for measuring at least two observables, the arrangement comprising: a light generation circuit (2) including a light source (21) for generating light and an optical resonance circuit including a first and a second cascade circuit, the first cascade circuit (3) including at least a first cascade optical resonator, FCOR (31), and the second cascade circuit (6) including at least a first and a second optical resonator (61, 62), wherein a first optical length of the first optical resonator and a second optical length of the second optical resonator are variable depending on different observables.

Furthermore, light exiting the second cascade circuit is coupled to a detector unit (9) including at least one photosensitive element (91). A control unit (10) is configured to selectively modulate or switch an optical length or an amplitude of light passing through the first or second optical resonator.

## Description

The invention relates to an optical sensor arrangement for measuring an observable, the arrangement including a light generation circuit, an optical resonance circuit, and a detector unit for detecting light generated by the light generation circuit.

Optical sensor arrangements are used for measuring at least one observable, wherein the observable can be the presence of a specific substance or other physical properties, such as changes in pressure or temperature. Some optical sensor arrangements include optical resonance circuits, which include at least one optical resonator, such as an optical microring resonator, as a very sensitive optical sensor type for sensing the observable. In many cases the resonator is exposed to a medium such as a gas or a liquid, where the medium may carry a chemical compound, a biological substance, or the like, to be measured by the optical sensor arrangement. In several cases the optical resonator is covered by a covering material which includes an active material such that molecules of the substance to be detected can dock at the active material.

Optical resonators have the property of allowing light of a specific frequency that represents a resonance frequency of the optical resonator (i.e., the wavelength of the light multiplied by an integer and the effective refractive index correspond to the optical length of the resonator) to enter the optical resonator while light of other wavelengths does not enter the resonator.

Many optical resonators have the property that when a physical condition, such as temperature or pressure, of the surrounding medium changes or a substance, such as a chemical or biological compound or substance, attaches to at least one of the surfaces of the resonator, the optical length of the optical resonator changes with it, i.e., the resonance frequency of the optical resonator is shifted. The shift in resonance frequency or optical length can be used to determine whether the observable to be sensed has changed or is found in the medium.

Often it is of interest to not only detect a single observable but to measure at least two observables simultaneously. An exemplary optical sensor for measuring several observables can be found in document WO 2011/000494. Said optical sensor comprises a plurality of optical resonators, the resonance frequency of which can be individually adjusted by a tuning device. A light generation circuit generates light and passes the light by the optical resonators such that light traveling through the waveguide may couple to the optical resonators through its evanescent field. Light of a resonance frequency of at least one of the resonators is absorbed by said resonator, and the detector unit detects light of a reduced intensity due to the absorption. When a substance docks at the active layer of the optical resonator, the resonance frequency of said resonator is shifted and, hence, the resonance frequency is shifted as well. This shift can be detected by the detector unit, and thus the presence of an observable can be determined. By choosing several resonators each, for example specific to a different substance, a plurality of substances can be detected.

It is further of interest to provide an optical sensor arrangement for measuring a plurality of observables which can detect small changes in the detected quantity of an observable. The minute change translates into a small change of the optical length of the resonator.

It is the objective technical problem to be solved by the claimed subject-matter to design an optical sensor arrangement for measuring at least two observables and to provide an alternative solution to the optical sensor arrangements found in the prior art.

The problem may be solved by an optical sensor arrangement including the features of claim 1. Furthermore, it will become apparent throughout this description that the problem can also be solved by a method for measuring at least two observables using an optical sensor arrangement as described herein. Further embodiments, developments, or alternatives to the invention may be accomplished by basing them on features of the dependent claims or the alternatives presented hereafter. Specifically, different embodiments of an optical sensor arrangement may leave out specific features from claim 1 or include alternatives to features found in claim 1.

The optical sensor arrangement for measuring at least two observables includes a light generation circuit including a light source for generating light. Additionally, several light sources may be used depending on the specific embodiment. Said light generation circuit is coupled to an optical resonance circuit which includes a first and a second cascade circuit.

The first cascade circuit includes at least a first cascade optical resonator, FCOR, which comprises an entry port for coupling light into the FCOR on an entry side of the first cascade unit and a drop port for decoupling light from the FCOR on a drop side of the first cascade circuit. The light source for the light generation circuit is coupled to the first cascade circuit such that light is fed into the entry port of the FCOR. In other embodiments, the first cascade circuit can include more than one FCOR, each of which comprises an entry port and a drop port for coupling and decoupling light, respectively.

The drop port side of the first cascade circuit is coupled to a second cascade circuit which includes at least a first and a second optical resonator. Again each of said optical resonators comprises an entry and a drop port for coupling and decoupling light, respectively.

The first optical resonator has a first optical length which is variable depending on one of the at least two observables. The second optical resonator is variable depending on the other of the at least two observables.

Due to the arrangement of the first and second cascade circuits and the light generation circuit, light enters the second cascade circuit only through the at least one FCOR of the first cascade circuit. Said circuit thereby functions as a filter circuit. While the spectral content of the light source can be rather broad, the FCOR filters frequencies which correspond to wavelengths of light which are resonant in the FCOR, i.e., the optical length of the resonator is a natural number multiplied by the said wavelengths. Thereby, the spectral content of the light source is adapted and only light of resonant frequencies is fed into the second cascade circuit and into the at least first and second optical resonators.

Said optical circuit design has several advantages. In one embodiment, a light source with a broad spectral content can be used. However, it is also possible to select a single mode, multimode laser or a tunable laser,

Furthermore, the optical lengths of the first cascade circuit and the second cascade circuit can be chosen to show a Vernier effect. The Vernier effect occurs when cascading resonators which have a slightly different free spectral range, FSR.

When the optical sensor arrangement has no exposure to the at least two observables to which the first and second optical resonators are sensitive, they are considered to be in a base state. In an active state, i.e., a state in which the optical sensor arrangement is exposed to a medium or gas which may include or transport the observables to be detected, the observable, such as a change in temperature, a change in pressure, or a specific biological or chemical compound or substance in the medium, affects the optical resonators and effects a change in the effective refractive index and thus a change in their optical lengths, thereby changing the resonance frequencies. In other words, the shift in resonance frequencies from the base state to the active state, in which a substance to be detected is part of the medium, has the effect that light of a specific frequency, which passes the first cascade circuit and also passes the first optical resonator in its base state, no longer passes said first optical resonator in its active state.

Since the shift of the optical length of the first or second optical resonators from its base to its active state can be rather minute, it may be difficult to determine whether the observable has actually been detected. To improve the resolution of the optical sensor arrangement, the resonators can be chosen to exhibit the Vernier effect.

Since an optical resonator often not only passes a single resonance frequency but a comb of frequencies (where the transmission peaks of the comb form the teeth of the comb and the teeth are essentially evenly distributed and spaced in a particular frequency range and all teeth correspond to a base resonance and higher or lower order resonances), it is possible that while light of a first frequency passes the FCOR and the first optical resonator in its base state, light of the first frequency no longer passes the first optical resonator in its active state. The transmission of light through the FCOR and the first optical resonator in its base state is due to at least one tooth of the comb of the FCOR and at least one tooth of the comb of the first optical resonator overlap, and allowing light to pass. Furthermore, this may mean that no other teeth of the comb of the FCOR and teeth of the comb of the first optical resonator overlap.

Usually, the shift from the base state to the active state due to the presence of an observable is rather minute and much smaller than the free spectral range of either the FCOR or the first optical resonator. However, if the free spectral ranges of the FCOR and the first optical resonator are slightly different (i.e. the "distance" of the teeth of the comb is different, the distance being represented by the FSR), a minute change in the effective refractive index due to the presence of an observable and therefore a small wavelength shift for each of the teeth of the comb of frequencies of the first optical resonators may have the effect that a different tooth of the comb (i.e. a different transmission peak) of the FCOR and a different tooth of the comb of the first optical resonator overlap, allowing light of a wavelength corresponding to the different tooth to pass through the FCOR and the first optical resonator. Hence, the minute change of the shift of resonance frequencies due to the observable (smaller than the magnitude of the FSR) can be detected by a much bigger shift in the order of magnitude of the FSR.

Thus, using the Vernier effect, an optical sensor arrangement with a higher frequency resolution can be designed.

Even though in the previous paragraphs the situation between the first cascade optical resonator and the first optical resonator has been described, the same is true for light passing through the FCOR and the second optical resonator or any further resonator of the second cascade circuit.

In a base state of the first and second optical resonators, their respective optical lengths may be identical or different.

The optical sensor arrangement further includes a detector unit for detecting light collected at the drop ports of the optical resonators of the second cascade circuit. The light from the second optical resonators can be collected by a single optical path or by individual optical paths which may be coupled and fed to the detector unit as a combined signal, or they can be received as a plurality of different signals which are received by a photosensitive element with a spatial resolution.

The optical sensor arrangement further includes a control unit configured to selectively modulate or switch an optical length or an amplitude of light in the first and/or second cascade circuits, preferably switch on/off an amplitude of light, where the light travels through either the first or second optical resonators or to modulate an optical length of a resonator of the first or second cascade circuit. In order to be able to separate signals due to the first optical resonator or the second optical resonator, said resonators may include a switch which switches "on" or "off" the first or second optical resonator or an optical path leading to or leading from said optical resonator. When the switch is "on", light of the resonance frequencies of the first or second optical resonators may pass through; when the switch is "off", no light passes through said resonators. By including a multiplexing unit in the control unit, the switches can be operated selectively, and the signal received at the detector unit correlates with the signal of only one of the first or second optical resonators. As will become obvious later on, the switches do not necessarily need to be arranged in each of the first and second optical resonators but may be placed in an optical path leading to or from the first or second optical resonator to separate light passing through one of the first or second resonators.

Alternatively or in addition to the control unit mentioned in the previous paragraph, the control unit can be configured to not switch on or off light passing through the first or second optical resonators but to only modulate light passing through the first or second optical resonators. When analyzing the signal received at the detector unit, the specific modulation frequencies can be used to determine which parts of the received signal have travelled through the first optical resonator and which parts have travelled through the second optical resonator.

The switches or the modulators for selectively modulating light passing through the first or second optical resonators can be used in addition to each other or alternatively. A further alternative to using switches or modulators is using a photosensitive element with a spatial resolution, i.e., a photosensitive element which can spatially separate signals received at different locations. An example is a CCD or a CMOS camera chip of which the different pixels can be used to spatially separate light detected on the chip at different locations. If light passing through the first or second optical resonators is detected on the chip at different locations and the locations can be easily distinguished, using modulators or switches may not be necessary. However, the spatial resolution raises the price of the detector units in comparison to modulators, switches, and multiplexing circuits.

As mentioned above, in one embodiment of the optical sensor arrangement the optical length of the FCOR is different from an optical length of the first and second optical resonators in their base state. By choosing the optical lengths accordingly, the Vernier effect can be accessed with the optical sensor arrangement.

In order to effectively use the Vernier effect, the FSR of the first and second optical resonators may differ from the FSR of the FCOR by less than 5 percent or less than 1 percent. Even though it is more difficult to receive a clear signal when the FSRs are very close to each other, the resolution of the optical resonance circuits is greatly enhanced.

In a further embodiment, the optical sensor arrangement includes more than a first and second optical resonator in the second cascade circuit. In general, the first and second cascade circuits are connected to each other in series, i.e., the light from the drop ports of the resonators of the first cascade circuit is fed to one or more entry ports of the resonators of the second cascade circuit.

By using more than two optical resonators in the second cascade circuit, more than two observables can be analyzed and detected by a single optical sensor arrangement.

Suitable optical resonators include microring resonators, Fabry-Perot resonators, optical whispering gallery mode resonators or photonic crystal resonators. A modulator can, for example, be a waveguide-integrated PIN diode used as an electro-optical modulator, a Mach-Zehnder based modulator, an electro-optical amplitude modulator, a light chopper, a mode filter or similar devices.

In a further embodiment, the light generation circuit includes a single light source. The light source can either have a broad spectrum where the FCORs of the first cascade circuit filter the wavelengths according to their resonance frequencies.

In a further embodiment, the light generation circuit may include a laser, particularly a distributed feedback (DFB) laser.

If said laser is tunable, it may be tuned through a range of frequencies hitting more than one transmission peak of the comb of frequencies of the resonators of the first and second cascade circuits.

Furthermore, a multi-mode laser may be used which can output a comb of transmission peaks. The tuning of the laser can be performed by the control unit of the optical sensor arrangement or by a further control unit for controlling the light generation circuit. In an alternative embodiment, the first cascade circuit is not necessary, when a multi-mode laser is used. The comb of frequencies of the multi-mode laser should then have a FSR slightly broader than the FSR of the resonators of the second cascade circuit. The Vernier effect is then due to the multi-mode laser and the resonators of the second cascade circuit.

In order to ensure that the first and second optical resonators are specific to the chosen observable, each resonator may comprise an active layer for the selective accretion of one or more substances to be detected. The active layer may be exclusively specific to molecules or a group of specific substances. The active layer may be a coating which specifically targets specific biological substances or groups of substances or specific chemical substances or compounds. While each of the optical resonators of the second cascade circuit may include a coating of a material for selectively accreting a substance, some of the optical resonators can be configured for detecting, for example, changes in temperature or changes in pressure. When the optical resonator includes an active layer, the optical resonators may be exposed to a medium during the measurement in order to have contact with the substance to be analyzed. In addition, at least one optical resonator of the second cascade circuit may be encapsulated in the sense that it is not exposed to the substances to be detected or to the observables to be detected. Said encapsulated resonator may be used as a gauge resonator.

In a further embodiment, the optical sensor arrangement may include an amplifier as part of the detector unit, preferably a differential amplifier for evaluating output signals of the at least one light sensitive element. To separate the signals, a lock-in amplifier may be used. In a lock-in amplifier, the signal arriving at the light sensitive element may be filtered by a signal of the modulation frequency for each optical resonator. Due to a periodicity of the modulation signal, the different components which are not modulated with a frequency of the modulation signal can be eliminated, and only the signal corresponding to a specific optical resonator or its corresponding optical path is allowed to pass the amplifier or is amplified.

Further, a second detector unit can be used with the optical sensor arrangement. The detector unit may be situated at an entry port side of the first and second optical resonators of the second cascade circuit. In contrast to the first detector unit, the second detector unit then does not measure a transmission spectrum of the first and second optical resonators but an absorption spectrum. The absorption spectrum lacks intensities at frequencies, to which the first or second optical resonators are resonant. The second detector unit can be used to verify results of the first detector unit or serve as a redundant detector unit used when the first detector unit fails.

In a further embodiment, the FCOR is actively tunable in its optical length. By being able to actively tune the optical length of the FCOR, the optical sensor arrangement, instead of using a tunable light source, may include only a single-mode light source, a multi-mode light source or a broad band source. By tuning the optical length, different transmission peaks of the FCOR pass by the wavelength of the light of the light generation circuit.

Several embodiments of how light from the light generation circuit couples into the first cascade circuit, from the first cascade circuit into the second cascade circuit, and from the second cascade circuit into the detector unit can be envisioned and have their own advantages and disadvantages.

In a first embodiment, the first and second optical resonators of the second cascade circuit are coupled to the detector unit by a separate optical path. "By a separate optical path", it is understood that, for example, different waveguides may be employed to transport light from the first or second optical resonators to the detector unit. When using separate waveguides, the light of the separate waveguides may be bundled by a coupler and then coupled to a detector unit to simplify and reduce the number of waveguides.

In a further embodiment, the first cascade circuit includes more than one FCOR. In such a case the first FCOR may be optically coupled to the first optical resonator by a first optical path, and the further FCOR, which is part of the first cascade circuit, is optically coupled to the second optical resonator by a second optical path. Both paths preferably do not overlap.

If several optical resonators are used in the first cascade circuit, the light generation circuit may be coupled to each of the optical resonators of the first cascade circuit by a separate optical path. However, it is possible that when using more than two optical resonators and either the first or second cascade circuit, the first and second optical resonators are connected to the FCOR by a single waveguide whereas a second optical resonator of the first cascade circuits couples to a third optical resonator of the second cascade circuit by a separate optical path.

Further details regarding optical sensor arrangements are found in the following description of exemplary embodiments and the drawing illustrating various aspects of the exemplary embodiments. It is pointed out that features not claimed in the independent or dependent claims but shown in the drawings and described in the corresponding description are, each in its own right, also features of this application. They may be claimed without necessarily including all features shown or described in the exemplary embodiment. Consequently, any single feature shown in a specific embodiment may be claimed individually. In particular, features described in connection with the optical sensor arrangement may be claimed in a method claim and features disclosed in a method description may be claimed in an apparatus claim.

The exemplary embodiments ofthis application are subsequently explained with reference to Figures 1-5.
- Fig. 1: discloses a first embodiment of an optical sensor arrangement;
- Figs. 2A and 2B: illustrate the Vernier effect used in the embodiment of Fig. 1;
- Fig. 3: shows a further example of an optical sensor arrangement;
- Figs. 4 and 5: show further exemplary embodiments of an optical sensor arrangement with a plurality of separate optical paths.

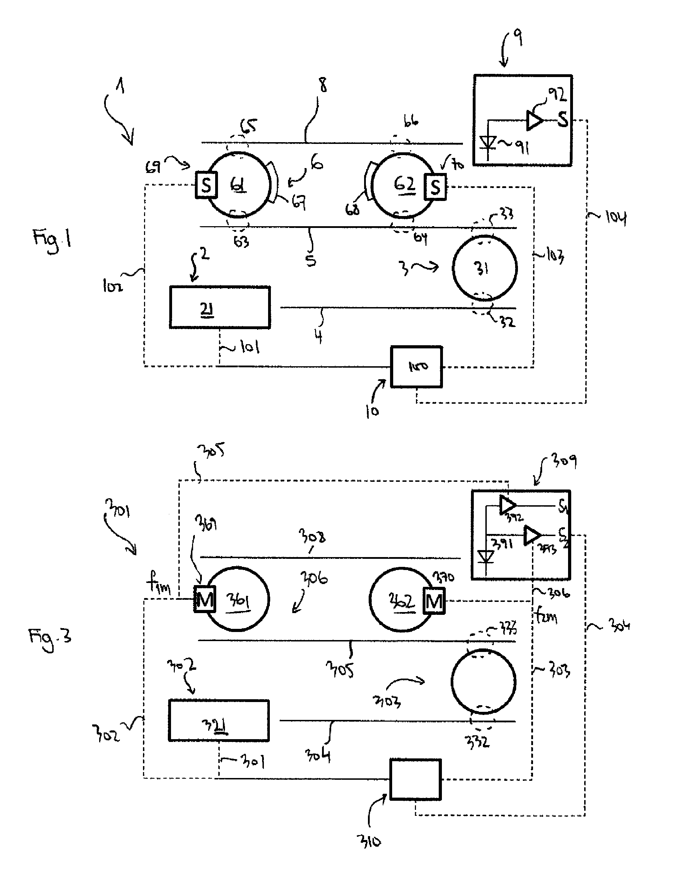

**Figure 1** discloses an optical sensor arrangement 1 including a light generation circuit 2 which includes a DFB laser 21. Furthermore, the arrangement includes a first cascade circuit 3 which is optically coupled to the light generation circuit 2 by a waveguide 4. The first cascade circuit includes a first cascade optically resonator 31, which is a microring resonator in the shown embodiment. The FCOR 31 is coupled to the waveguide 4 by an entry port 32. The entry port is defined in this embodiment by a region in which the optical waveguide and part of the FCOR 31 are situated so closely next to each other that an evanescent field of light traveling through the optical waveguide 4 may couple to the optical resonator 31 through the entry port 32. Another option for coupling the waveguides and each of the optical resonators is to use a Mach-Zehnder interferometer.

In the present example the first cascade circuit includes only a single FCOR31. Said optical resonator further includes a drop port 33 which is coupled to a waveguide 5, which is realized as a rib for guiding light. The rib leads to the second cascade circuit 6 which includes a first optical resonator 61 and a second optical resonator 62. Both optical resonators are microrings in this example but could be realized as Fabry-Perot or photonic crystal resonators. Each of the optical resonators 61 and 62 include an entry port 63 and 64, respectively, a drop port 65 and 66, respectively, as well as a layer of active material 67 and 68, respectively. Each layer 67 and 68 is for selectively accreting a group of chemical or biological substances. Since the material of the two layers is different, they selectively accrete different substances, and it can be easily seen that by employing a plurality of optical resonators in the second cascade circuit 6, a plurality of observables may be measured. Each of the first and second optical resonators includes an optical switch 69 and 70, respectively, which may be switched on or switched off for passing light through the corresponding optical resonator. The switches can be electro-optical amplitude modulators, which switch on and switch off light traveling through said resonator or, alternatively, a waveguide leading to or from the resonator by fully dampening the amplitude.

The drop ports of the optical resonators of the second cascade circuit 6 couple to a waveguide 8 which couples the light to a detector unit 9, which includes a photodiode 91 and an amplifier 92. The signal of the photodiode is forwarded to the amplifier 92 and evaluated by control unit 10, which includes a CPU 100. Furthermore, it may further include or alternatively include a microcontroller or a field-programmable gate array. The control unit 10 is connected to the light generation circuit 2 by a connection 101 for controlling the laser. The control unit may restrict the range of frequencies through which the laser 21 is tuned, and it may determine the time used per scan through the set range. Furthermore, the control unit 10 is connected to the first and second switch 69, 70 through connections 102 and 103, respectively. Additionally, it is connected via connection 104 to an output port of amplifier 92 of the detector unit 9. By controlling switches 69 and 70, control unit 10 can easily correlate the signal of which optical resonator of the second cascade circuit can arrive at the detector unit 9 and thus easily determine whether a signal received at the output port of the amplifier 92 is due to light passing through the first or second optical resonator 61 or 62.

Optical sensor arrangement 1 can be arranged on a single substrate or circuit board. In the present embodiment all components are arranged on a silicon substrate. The microring resonators and the waveguides consist of ribs or closed ribs (in this example made from silicon and possibly buffered by a silicon oxide layer from the silicon substrate). However, the optical sensor arrangement can also be constructed on a circuit board.

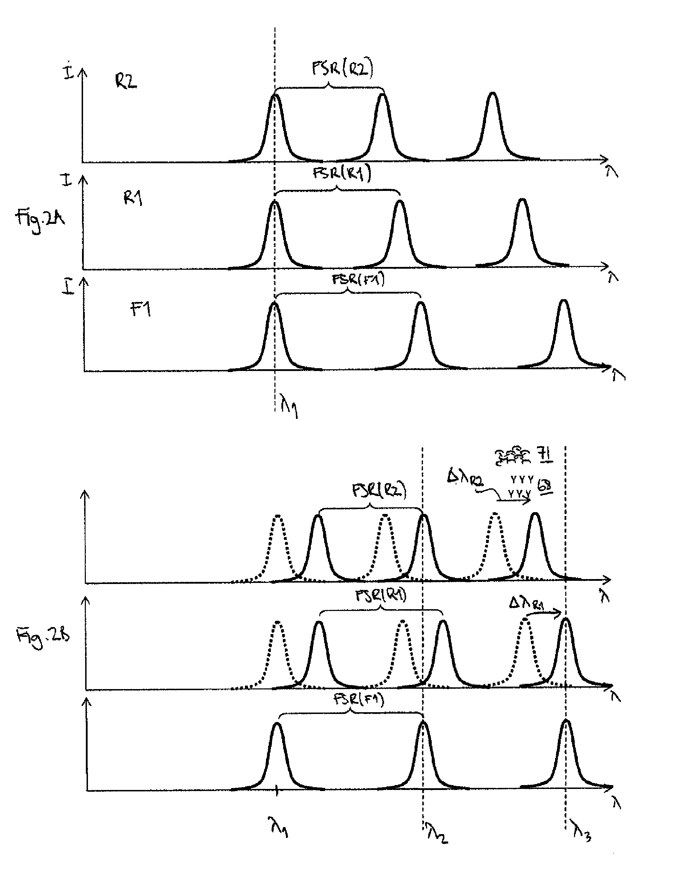

In the following, the operation of the optical sensor arrangement 1 of Fig. 1 shall be explained with the help of **Figures 2A** and **2B****.**

**Figure 2A** shows the transmission spectra F1, R1, and R2. The transmission spectrum F1 corresponds to the transmission spectrum of optical resonator 31, the transmission spectrum R1 corresponds to the transmission spectrum of optical resonator 61 in its base state, and the transmission spectrum R2 corresponds to the transmission spectrum of the optical resonator 62 in its base state. On the ordinates the wavelength of the light and on the abscissa the intensity of the light is shown.

It can be easily seen that the free spectral range of the three transmission spectra is different. In particular, the free spectral range FSR of the spectrum F1, i.e., FSR(F₁) is larger than FSR(R1), which is larger than FSR(R2). Although no absolute values are given, FSR(R1) and FSR(R2) differ from FSR(F1) by about 1 and 2percent, respectively, FSR(F1) being the largest FSR of the three FSRs. In the base state, the transmission spectra R1 and R2 have a first transmission peak at wavelength λ₁ which coincides with the first transmission peak of spectrum F1. In other words, light of the wavelength or frequency corresponding to the first transmission peak decouples from the drop port of optical resonator 31 and may enter the first or second optical resonator depending on the state of switches 69 and 70. Since during the operation of the optical sensor arrangement of the embodiment of Fig, 1 only one of the optical resonators is switched on (when the optical sensor arrangement is used for a measurement), the shown transmission spectra R1 and R2 have approximately the same intensity. It can be easily understood that if both optical resonators 61 and 62 were switched on, the intensity of the frequency spectrum peaks R1 would be greatly lowered since most of the light would have coupled into the second optical resonator 62.

In the following, it will be assumed that switch 69 is on while switch 70 is off. When the light source 21 is tuned and has a wavelength λ₁ coinciding with the first transmission peaks of optical resonators 31 and 61 (or in other words the first tooth of the respective comb), a signal S can be detected at the output of the amplifier 92. The signal is forwarded to the control unit 10 and correlated with the state of the switches, and it is then clear that light responsible for signal S has passed the first optical resonator only.

The same is true if switch 69 is switched off while switch 70 is switched on, the only difference being that signal S is exclusively based on light passing through the second optical resonator.

In **Figure 2B**, the transmission spectra F1, R1, and R2 are shown, where the first and second resonators 61 and 62 have been exposed to their respective observable, are in an active state. This is indicated, for example, by the icon in the top right corner of Fig. 2B showing the active layer 68 and the group of substances 71 to be detected. Since the group of substances has been accreted on the active layer 68, the transmission peaks of the transmission spectrum R2 have been shifted by an amount Δλ_{R2}. For reasons of simplicity, it will be assumed that each of the transmission peaks is shifted by the same amount. This simplifies the explanation, but the following is also true when different peaks are shifted by a differing amount. Since the first optical resonator 61 is selective to a different group of substances than the second optical resonator 62, the shift in the transmission spectrum may be different from the shift experienced by the second optical resonator 62. In the present case, the shift Δλ_{R1} is different from Δλ_{R2}. The dotted lines in the frequency spectra R1 and R2 correspond to the frequency spectra of the first and second optical resonators 61 and 62 in their base state as shown in Fig. 2A. It can be easily seen that the first transmission peak λ₁ of the optical resonator 31 no longer coincides with the first transmission peaks of transmission spectra R1 and R2. However, the second resonance peak at the wavelength of λ₂ coincides with the second transmission peak of spectrum R2 in its active state. Further, the third transmission peak of wavelength λ₃ coincides with the third transmission of spectrum R1. It is obvious that light of frequencies corresponding to λ₂ or λ₃ will now result in a signal S at the detector unit 9 depending on the state of the switches. Furthermore, it can be easily seen that the small shift Δλ_{R1} or Δλ_{R2} in transmission peaks of the spectra R1 and R2 is mapped to a distance of the order of magnitude of FSR(F1). Hence, a small shift in the spectrum is mapped to a bigger shift, thereby allowing a very exact measurement and an improved resolution whether an observable has been detected.

In the present example, it is obvious that wavelengths λ₂ and λ₃ correspond to light of wavelengths passing through either the first or the second optical resonator.

The optical sensor arrangements 301, 401, and 501 of **Figures 3-5** include components similar to the components described in the description of the embodiment of Fig. 1. In particular, in the embodiments of Figs. 3-5, components which are similar to the components of optical sensor arrangements 1 are identified by simply adding 300, 400, or 500, respectively, to the respective component shown in Fig. 1. If components of the following embodiments are designed differently, it will be mentioned specially.

The embodiment of **Figure 3** differs from the embodiment shown in Fig. 1 by employing a modulator 369 in the first optical resonator 361 and a modulator 370 in the second optical resonator 362. Control unit 310 now modulates the optical lengths of the first and second optical resonators 361 and 362.

A modulation signal f_{1M} or f_{2M} specific to each modulator is forwarded by connections 305 and 306 to a lock-in amplifier of detector unit 309. Light traveling through the first or second optical resonator enters optical waveguide 308 and is forwarded to photodiode 391 of detector unit 309. The signal output at photodiode 391 is forwarded to amplifiers 392 and 393. The signal is modulated by the modulation frequency f_{1M} for modulating the first optical resonator 361 in amplifier 392 and by the modulation frequency f_{2M} in the second amplifier 393. This results in a signal S₁ being output at the output of amplifier 392 and in a signal S₂ output at the amplifier 393. The signals S₁ and S₂ can be correlated with light having traveled through either the first or the second optical resonator, respectively. Each signal can then by analyzed by control unit 310.

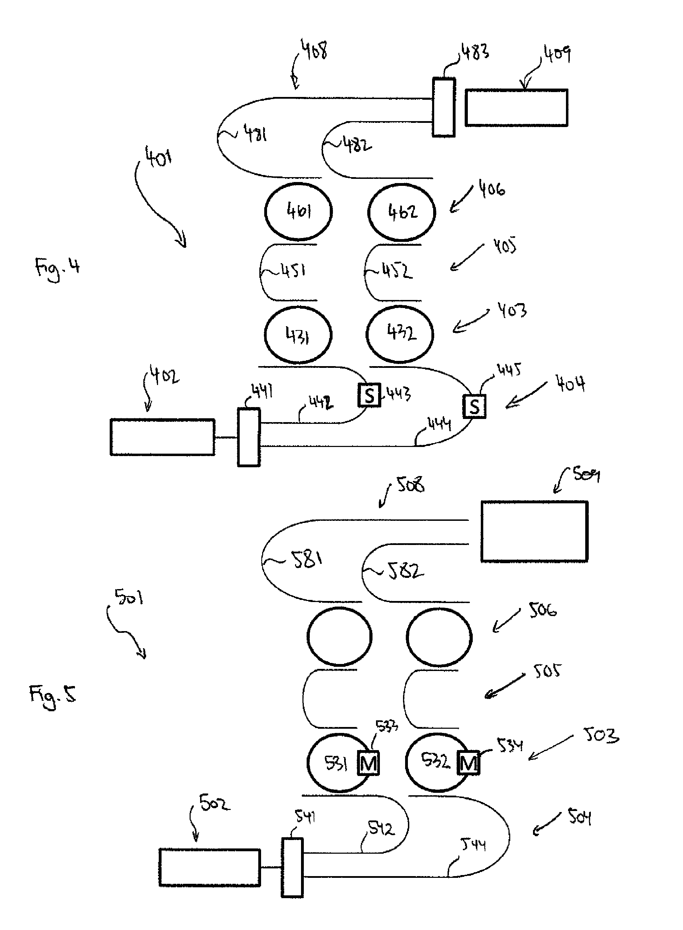

**Figures 4** and **5** disclose alternative embodiments using separate optical paths to couple light from the light generation circuit to the first and second optical resonators. In optical sensor arrangement 401, a light generation circuit 402 is coupled to optical path circuit 404, which includes an optical coupler 441, a first optical path 442 including an optical switch 443, and a second optical path 444 including a second optical switch 445. The optical paths 442 and 444 couple individually to a first and a second optical resonator 431 and 432, respectively, of the first cascade circuit 403. The first and second resonators 431 and 432 are coupled to different optical resonators of the second cascade circuit 406 by optical path circuit 405 including optical path 451 coupling optical resonator 431 and optical resonator 461 and optical path 452 coupling optical resonator 432 and optical resonator 462. While the optical resonators of the first cascade circuit 403 act as filters and their FSR and optical length can be chosen to exhibit a Vernier effect in connection with the optical resonators of the second cascade circuit, the optical resonators of the second cascade circuit are configured to change their optical length when influenced by a first or a second observable. Light exiting the first or second optical resonators of the second cascade circuit 406 is coupled to a detector unit 409 by optical path circuit 408 which includes optical path 481 and optical path 482. The light of both these optical paths is coupled by optical coupler 483 and forwarded to the detector unit.

Even though the switches as shown in Fig. 4 are located in different parts of the circuit, they fulfill the same function as the switches in the embodiment of Fig. 1. By switching on or off either switch 443 or switch 445, light only passes the first optical resonator 461 or the second optical resonator 462. However, due to the separate optical paths, the switches are merely used for making signal analysis easier since no other interference occurs between light passing the first optical resonator 461 and the second optical resonator 462.

**Figure 5** discloses a similar arrangement to the one shown in Fig. 4 except for two differences. Instead of using switches, optical sensor arrangement 501 includes modulators 533 and 534 for modulating the optical length of the first and second optical resonators 531 and 532 of the first cascade circuit 503. The further components are similar to the ones found in the embodiment of Fig. 4. Light collected from the first and second optical resonators of the second cascade circuit 506 is forwarded to the detector unit by separate optical paths 581 and 582. Detector unit 509 includes a CMOS chip which is capable of spatially separating signals received from the separate optical paths 581 and 582. Since the signals arriving at different locations of the CMOS chip of the detector unit 509 and by additionally carrying different modulation frequencies based on the modulators 533 and 534, signals arriving at the detector 509 can be easily separated. In an alternative embodiment optical sensor arrangement 504 may not include modulators 533 and 534 since the spatial resolution of the camera of detector unit 509 is sufficient to separate the signals.

Even though the embodiments discussed so far have been explained in the context of optical ring resonators, other resonators may be employed. For example, a plurality of Fabry-Perot resonators may be used instead of microring resonators, as shown in the examples. For further detail, the reader is referred to the European patent application EP 12 07 5134.2.

## Claims

1. An optical sensor arrangement (1) for measuring at least two observables, the arrangement comprising:
a light generation circuit (2) including a light source (21) for generating light;
an optical resonance circuit including a first and a second cascade circuit,
the first cascade circuit (3) including at least a first cascade optical resonator, FCOR (31), which comprises an entry port (32) for coupling light into the FCOR on an entry side of the first cascade circuit and a drop port (33) for decoupling light from the FCOR on a drop side of the first cascade circuit;
the second cascade circuit (6) including at least a first and a second optical resonator (61, 62), each of said optical resonators comprising an entry port (63, 64) for coupling light into the optical resonator on an entry side of the second cascade circuit and a drop port (65, 66) for decoupling light from the optical resonator on a drop side of the second cascade circuit, wherein a first optical length of the first optical resonator is variable depending on one of the at least two observables and a second optical length of the second optical resonator is variable depending on the other of the at least two observables, and
wherein the light generation circuit is optically coupled to the entry side of the first cascade circuit, and the drop side of the first cascade circuit is coupled to the entry side of the second cascade circuit;
a detector unit (9) for detecting the light including at least one photosensitive element (91),
wherein the detector unit is optically coupled to the drop side of the second cascade circuit; and
a control unit (10) configured to selectively modulate or switch an optical length or an amplitude of light in the first and/or second cascade circuit or to selectively modulate or switch an optical length or an amplitude of light passing through the first and second optical resonators.

2. The optical sensor arrangement of claim 1, wherein, in a base state of the first, second optical resonators and FCOR, the FCOR optical length is different from the first and second optical length.

3. The optical sensor arrangement of claim 1, wherein, in a base state of the first, second optical resonators and FCOR, a free spectral range, FSR, of the FCOR is different from a FSR of the first and second optical resonators, preferably different by less than 5%, or less than 1%.

4. The optical sensor arrangement according to any of the preceding claims, wherein the first and/or second cascade circuit include further optical resonators.

5. The optical sensor arrangement according to any of the preceding claims, wherein the optical resonators include one of a microring resonator, a Fabry-Perot resonator or a photonic crystal resonator.

6. The optical sensor arrangement according to any of the preceding claims, wherein the light generation circuit includes a single, tunable light source.

7. The optical sensor arrangement according to any of the predecing claims, wherein the light generation circuit includes a multi-mode laser.

8. The optical sensor arrangement according to any of the preceding claims, wherein the first and the second optical resonator each comprise an active layer (67, 68) for the selective accretion of one or more substances to be detected.

9. The optical sensor arrangement according to any of the preceding claims, wherein the detector unit includes an amplifier (92), preferably a differential amplifier for evaluating output signals of the at least one light sensitive element.

10. The optical sensor arrangement according to any of the preceding claims, wherein the FCOR is actively tunable in its optical length.

11. The optical sensor arrangement according to any of the preceding claims, wherein the first cascade circuit comprises at least a further cascade optical resonator, COR.

12. The optical sensor arrangement according to claim 11, wherein at least the FCOR is optically coupled to the first optical resonator by a first optical path (451) and the further COR is optically coupled to the second optical resonator by a second optical path (452).

13. The optical sensor arrangement according to claims 11 or 12, wherein the light generation circuit couples to the FCOR and further COR by a separate optical path (442, 444).

14. The optical sensor arrangement according to any of the preceding claims, wherein each of the first and second optical resonators are coupled to the detector unit by a separate optical path.

15. The optical sensor arrangement according to any of the preceding claims, wherein the at least one photosensitive element is a photodetector or a camera.
